# EUROPEAN PATENT SPECIFICATION

(11) **EP 1 116 368 B1**
(45) Date of publication and mention of the grant of the patent: **22.06.2005**
(21) Application number: 99949116.0
(22) Date of filing: 21.09.1999
(51) Int. Cl.: H04L 29/06, H04L 9/08, H04L 12/58

(54) **A SECURE DATA TRANSFER SYSTEM**
SICHERES DATENÜBERTRAGUNGSSYSTEM
SYSTEME SECURISE DE TRANSFERT DE DONNEES

(30) Priority: 21.09.1998 GB 9820558
(43) Date of publication of application: 18.07.2001
(73) Proprietor: Viacode Limited, London EC1V 9HQ (GB)
(72) Inventor: PERKINS, Rodney, Belper, Derbyshire DE56 2TE (GB)
(74) Representative: Musker, David Charles
(86) International application number: PCT/GB1999/003140
(87) International publication number: WO 2000/018060

(56) References cited:
- EP-A- 0 798 892
- US-A- 5 557 765
- J. LINN: "Privacy Enhancement for Internet Electronic Mail: Part 1: Message Encryption and authentication procedures" RFC1421, [Online] February 1993 (1993-02), pages 6-30, XP002132590 Retrieved from the Internet: <URL:ftp://ftp.isi.edu/in-notes/rfc1421.tx t> [retrieved on 2000-03-09]

## Description

This invention relates to secure data transfer systems. The invention is particularly applicable to secure data transfer involving a trusted third party (TTP).

Encryption of messages for reasons of security and authenticity has been practised in many forms. In the context of digital communications, encryption based on mathematical algorithms is under continual development. A discussion of encryption techniques can be found in many text books, for example Applied Cryptography by B. Schneier, John Wiley & Sons Inc., 1996.

Symmetric cryptography involves the use of a single key which is known to both the message sender and recipient. The key is used to encrypt the message and the same key is used at the message destination for decryption. It is vital to the integrity of such a system that the key remains the secret of the sender and the recipient. Any doubt as to the security in which the key is held by either party undermines the integrity of the system as any other party having knowledge of the key can use it to decrypt the message. An example of a symmetric key cryptography system is the well-known Data Encryption Standard (DES).

To address the security problem associated with symmetric key systems, public key (asymmetric) cryptography was developed. In this arrangement the key sharing problem of symmetric cryptography is avoided by using an algorithm which has two keys. One key is used to encrypt the message and the other key is used to decrypt it. Thus, there is no need to transmit and share one key between correspondents. Any party is able to encrypt a message using the intended recipient's public key, but only the holder of the other (private) key as well is able to decrypt it. For multi-user systems, asymmetric key encryption techniques are commonly employed. Such public/private key systems have been developed by, for example, RSA Laboratories of Redwood City, California, USA.

In practice asymmetric key algorithms are too slow to use for the encryption and decryption of large quantities of data. To address this problem a unique symmetric key is generated for each data transfer and this symmetric key is transferred from one party to the other using an asymmetric (public) key method. This provides the speed advantage of symmetric keys while retaining the advantages of an asymmetric (public) key.

In an extension of the asymmetric key system, it is possible to develop a digital signature by which to verify that the sender of the message was the party purporting to have done so. To do this the sender encrypts a digest of the message (called a 'hash') using the private key. The digest is now decipherable by anyone using the public key, but the sender is verified because only the sender knew the private key with which it was encrypted. This provides authentication of the sender to the user. The fact that the private key of the asymmetric key system is kept only by the sender provides a useful form of authentication known as 'non-repudiation' as there is only one custodian of the private key for decryption purposes. The sender cannot deny being the source of the message.

Assurances as to the identity of the decrypter, i.e. the recipient, are just as necessary as those associated with the encrypter. To address this it is known to employ the services of a trusted third party (TTP) or certificate authority. The role of the TTP is to certify to either or both parties that the other is who they purport to be. Certification links a particular key with the identity of a party. Clearly, the security of the TTP is vital to its standing as an issuer of certificates.

The certificate typically includes identification data as well as identification of the certification authority and the duration for which the certificate is valid. A so-called distinguished name provides authentication of an identity linked to a specific capacity, e.g. rank in an organisational hierarchy. This can be used in addition to the certificate associated with the transacting site.

Encryption software enables users to communicate securely by encrypting files and attaching them to electronic mail (e-mail) messages. The files cannot be read by anybody other than the intended recipient of proven identity. There are many implementations of such software, for example that described in the article by J Linn title "Privacy Enhancement for Internet Electronic Mail: Part 1: Message Encryption and Authentication Procedures" RFC1421, [Online] February 1993 (1993-02), pages 6-30, XP002132590 Messaging". In all cases, however, the recipient has free access to the message, provided that the recipient's private key is available.

In some protocols there is provision for parties other than the sender or specified recipient to gain access to the contents of a message by encrypting a key and decrypting it in special circumstances. Two cases can be distinguished: (1) an escrow capability by a known person or organisation, and (2) release of the key(s) of the message to persons not defined when the message is encrypted. US 5,557,765 describes an example of (1) where a message key is divided into parts which are separately encrypted to escrow agents so that Law Enforcement Agencies or authorised bodies can recover them later. In general this is done secretly and the sender is not able to detect that the message has been accessed. EP-A-0,798,892 discloses an example of (2), where the encryption process is not specific to any defined recipient. The intention is that any recipient can access the plaintext (or part of it) by means of a payment. In return for the payment the message key is released. It is not necessarily the case that the sender can find out the identities of those recipients.

There is a need for an electronic equivalent of the recorded and registered postal systems. In many instances, it is necessary for the sender of mail at least to have verification that it has been received by the authorised recipient (proof of delivery). A recorded postal letter is signed for by the recipient when it is handed over by the deliverer. A registered postal letter is tracked through the postal system and logged as having passed various points up to delivery.

In an e-mail system the verification of delivery is not necessarily assured because either the acknowledgement software of the recipient may be disabled or the recipient is posing as the intended recipient fraudulently. E-mail is not inherently secure. Thus, security of an e-mail message depends entirely upon encryption of the message and the encryption system remaining uncompromised.

It has been proposed that recorded e-mail delivery can be ejected by using an encryption system by which an encrypted message is transferred to, and held by, a central point associated with a TTP for onward delivery to an authenticated user. The message is stored at the TTP until it is requested by the intended recipient in response to notification that the message is waiting. However, it has been found that there is a practical limit on the amount of information the TTP can store. Thus, the system is dependent upon the storage capacity of the TTP. Furthermore, not only the encryption system but the message itself has to conform to the TTP's reception/transmission system both in terms of format and transmission medium.

According to the present invention there is provided a data transfer system as specified in claim 1. Some preferred features are defined in the dependent claims.

The data transfer transmission in which the invention is embodied comprises a sender facility; a receiver facility and a key facility; the sender facility having means for encrypting data for the intended recipient, means for splitting the data into encrypted parts such that no part is decrypted on its own, means for encrypting at least one of the parts for a third party to produce a further encrypted part, means for combining the further encrypted part and the remaining encrypted part to produce a data block and means for sending the data block, the receiver facility having means for receiving the data block, means for requesting decryption of the further encrypted part by the key facility which has means for decrypting the further encrypted part and means for sending it to the receiver facility and the receiver facility also having means for decrypting the encrypted part and the decrypted further encrypted part provided by the key facility.

In one form the invention provides a data transfer system using an asymmetric ("public") key system, with or without an underlying symmetric data encryption, that encrypts and digitally signs data (the "plaintext") to an intended recipient. A sufficient portion of the encrypted data can be removed, such that the original text cannot be recovered from the portion remaining. The removed portion is signed and re-encrypted to a third party. This re-encryption should include or produce a unique identifier for the message that will be available to all parties; the sender, the receiver and the TTP. Both portions; the encryption with the portion removed and the re-encrypted removed portion are then combined and digitally signed. This data is then sent to the recipient by any suitable means of electronic or physical delivery.

The recipient is assured of the integrity of the entire data by the signature. The recipient then extracts the re-encrypted portion, digitally signs it and sends it to the third party.

The third party can validate the identity of the recipient from the recipient's signature and can then decrypt the removed portion of the original message. This includes the sender's signature and thus validates the sender's identity. As the recipient should have checked the overall signature from the sender this establishes that the entire message was delivered to the recipient. At some point in this process the unique identifier of the message, the identity of the recipient and any other pertinent information can be stored by the third party. The removed portion is then digitally signed by the third party and sent to the recipient.

The recipient checks the third party's signature and combines the removed portion with the remainder, recreating the original encrypted text. The recipient then validates the signature and decrypts the data; the result is the original plaintext.

At any later time the sender can apply to the third party for details of if and when the recipient requested decryption of the removed portion. This is taken to be proof of delivery of the entire message. All parties have sufficient proof of authenticity and integrity of all transactions.

In the particular example discussed:
1/ the encryption method is Privacy Enhanced Messaging (PEM),
2/ the portion removed is the PEM header,
3/ the unique identifier is the Message Integrity Check (MIC) field from the header of the re-encryption of the portion removed.
4/ the message is transferred from sender to recipient by Simple Message Transfer Protocol (SMTP)
5/ the requests to and replies from the third party are in a format specified by the third party using Transport Communication Protocol/Internet Protocol (TCP/IP). They are signed by privacy enhanced mail (PEM) or public-key cryptography system (PKCS#7).

In this form the removed part may conveniently be a key.

The invention can send the message directly to the intended recipient. This allows the encrypted data to be sent to the recipient in any format that is agreed with the sender. In this form the key facility is only responsible for passing on the further encrypted part in response to the request message. The key facility is not required to hold the message until it is called for by the intended recipient after transmission by the sender. Thus, the secure message system is not reliant upon the capacity of the key facility for storing and forwarding messages from sender to recipient. This enables recorded delivery as the TTP is able to log the request for the decrypted further encrypted part to decrypt the data.

Alternatively, the encrypted data can be sent to the key facility for onward delivery to the recipient. This enables registered mailing as the TTP is able to monitor the progress of the data.

In one particular form of the invention the encrypted data has a header part. It is convenient to split the data so that the header forms the basis of the further encrypted part.

The invention can be put into practice in various ways, some of which will now be described by way of example with reference to the accompanying drawings in which:
Figure 1 is a schematic block diagram of the constituent parts of a data transfer system;
Figure 2 is a functional diagram of the preparation and transfer of a message according to a first embodiment of the invention;
Figure 3 is a functional diagram of the preparation and transfer of a message according to a second embodiment of the invention;
Figures 4a) b) and c) are sequence charts of the message preparation according to Figure 2; and
Figure 5 is a sequence chart of the message preparation and transfer of a message according to Figure 3.

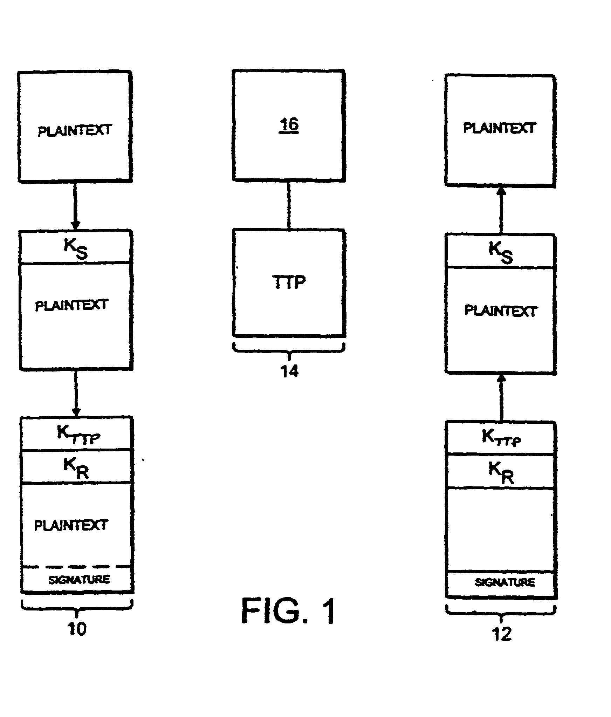

A data transfer system is shown in Figure 1. The system comprises a sender site 10, a receiver site 12 and a TTP site 14 having data processing capability 16. The sender and receiver sites 10 and 12 are each typically a personal computer connected to an intranet or internet for communicating with the receiver site 12 and the TTP site 14. The TTP site may include a key holding part and a message/data management part. Together the constituent parts of the TTP can be referred to as a key facility whether the different parts are grouped together or remote from one another.

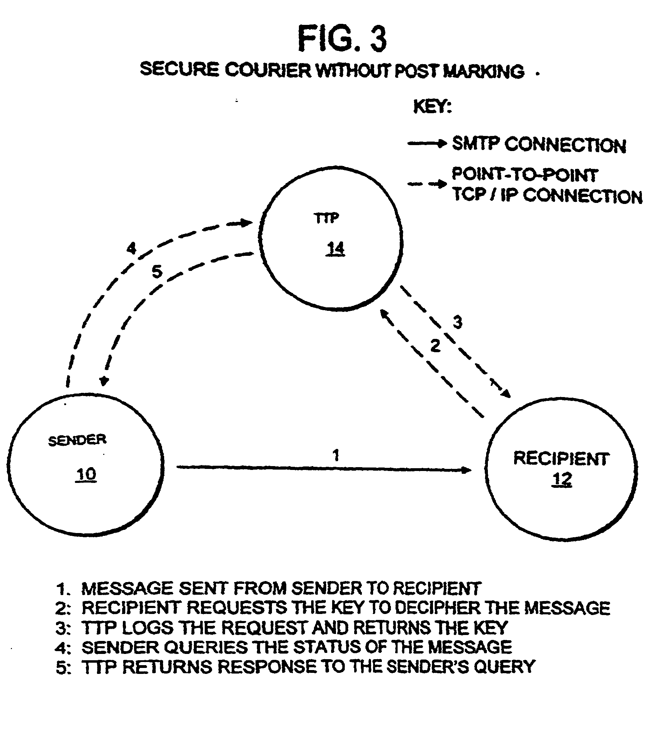

Referring to Figure 3. a first embodiment of the invention includes a Simple Mail Transfer Protocol (SMTP) connection between the sender and receiver sites 10/12 and a direct connection-orientated network layer protocol connection, such as a transmission control protocol/internet protocol (TCP/IP) connection between the sender site 10 and the TTP site 14. and the receiver site 12 and the TTP site 14. Thus, this embodiment is based on an e-mail communication system. Other forms of data communication could use the invention to equal effect.

In this embodiment the sender site computer is provided with an e-mail security application plug-in (API). The operation of this plug-in and corresponding equipment of the other parties can be implemented in various software formats. This embodiment makes use of a software toolkit produced by Entrust Technologies of Canada. It is used in the privacy enhanced mail (PEM) and PKCS#7 mode. The Entrust security system has various architecture components. The security is based on a choice of symmetric key algorithm, including the Data Encryption Standard (DES), Triple DES and CAST; asymmetric or public key algorithms, such a RSA, DSA and DIFFIE HELLMAN; and hashing algorithms such as SHA-1, MD2 and MD5. These are only examples of key systems. Other key systems will be known to the skilled person which could be used to equal effect. The receiver and TTP sites are similarly provided with Entrust System components configured to receive and decrypt data sent by the sender as described below.

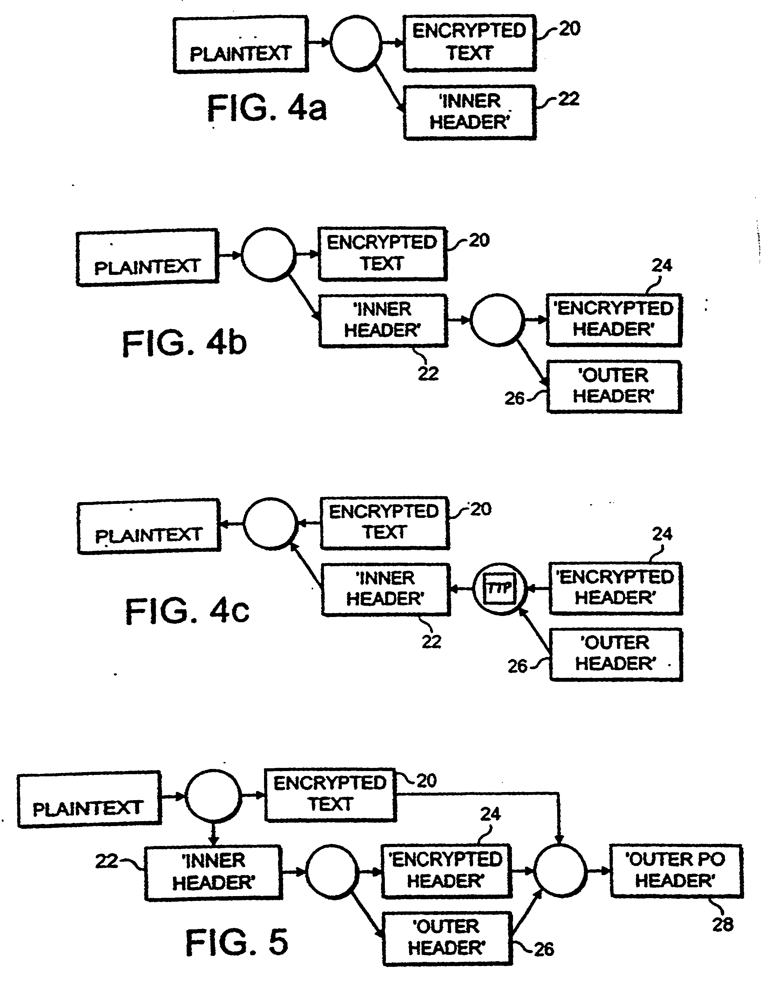

Refening to Figure 4a, at the sender site 10 the plain text message P/T is both encrypted with the public key for the recipient K_{R} or a group of recipients and signed by the PEM method using the sender's private key K_{S}. The 'header' part of the message is split off, i.e. in the standard PEM format that part from ".....BEGIN PRIVACY-ENHANCED MESSAGE....." to the terminating empty line. This is referred to as the "inner header" 22. The remainder is the "encrypted text" 20.

Referring to Figure 4b), still at the sender site 10, the inner header 22 is further encrypted and signed by the PEM method using the public key K_{TTP} of the third party only. This produces an "encrypted header" 24 and an "outer header" 26. The encrypted text 20, encrypted inner header 24 and outer header 26 are combined and digitally signed. The Message Integrity Check (MIC) field of the Outer Header 26 is a convenient unique identifier as it is a hash of the inner header 22 which, in turn, contains a hash of the plaintext; so the outer header MIC is dependent on the contents of the plaintext. Also, the inner header varies even when the same plaintext is used as the symmetric key is chosen at random on each occasion.

The encrypted text 20, encrypted inner header 24, the outer header 26 and signature are sent as a multi-purpose internet mail extension (MIME) within an e-mail message to form a message package. The unencrypted body of the message itself is an explanation of the sent data and instructions to the recipient on how to obtain software to decrypt the MIME inclusion.

The sender (and recipient) software for preparing the encrypted data comprises Microsoft Exchange or Outlook management software as well as the new plug-in interface. The preparation of the message is Windows-based, providing a tool bar button to click on if the service is required for encrypting e-mail transmission.

This embodiment of the invention is a form of e-mail recorded delivery. Thus, the prepared secure message is sent by the SMTP connection to the receiver site directly. At the same time an alerting message may be sent from the sender site to the TTP. Upon receipt of the e-mail message package the recipient is presented with the open e-mail message containing the instructions, the cipher text, the encrypted header, the outer header intended for the TTP. The recipient's software extracts the inner and outer headers, signs them as one block using PEM or PKCS#7 and transmits them to the TTP using TCP/IP. Thus, the receiver site is instructed by the open e-mail message to send at least the encrypted header 24 and the outer header 26 to the TTP, as indicated in Figure 4c, as a request for decryption of the encrypted header.

At the TTP the signature is checked. This process reveals the identity of the recipient. The outer header is used to decrypt the encrypted inner header 24, generating the inner header 22 to reveal the identity of the sender. The identities, date, time. message identifier (outer header MIC field) and other pertinent information are stored by the TTP as evidence that the recipient received the whole message, i.e. proof of-delivery.

Satisfied as to the authenticity of the sender and the recipient by their respective signatures, the TTP signs the inner header 22 using PEM or PKCS#7 and transmits it to the recipient. In the event that the recipient does not receive the inner header they must take further action to do so, as requesting the decryption is taken as evidence of receipt of the entire message.

The inner header also bears the digital signature at the sender, allowing the receiver site to re-verify the source of the message. Using standard PEM decryption the recipient can now recover the plaintext.

This embodiment of the invention provides a form of recorded delivery for data transmission, such as e-mail. The sender sends messages directly to the intended recipient. However, in order to read the message the receiver site must initiate a request to the TTP to obtain the appropriate key to decipher the message. The request is logged by the TTP to provide proof-of-delivery that the recipient has received the message. The message sender is able to submit a query to the TTP in order to establish whether the or each intended recipient has attempted to read the encrypted message. Because the bulk of the data transferred does not reach the TTP, data storage capacity within the TTP is of less concern than if the message were handled by the TTP. Furthermore, no data is held by the TTP until it is requested by the intended recipient.

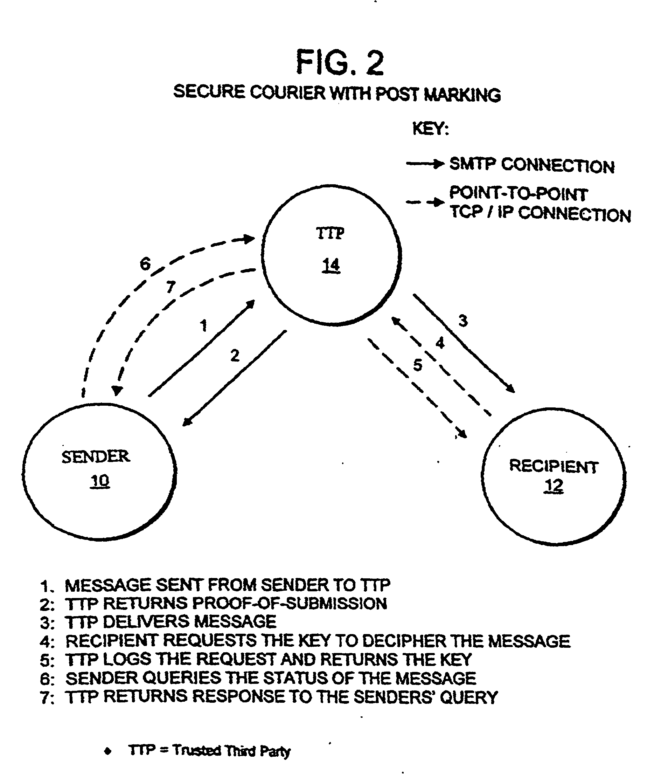

Referring now to Figure 2. a registered post embodiment of the invention is based on a similar concept to the recorded delivery system described above. In this embodiment, the sender site is linked to the TTP directly by a SMPT communication as well as a TCP/IP connection. There is no establishment of direct communication between a sender and the receiver site. The receiver site has SMTP and TCP/IP connection with the TTP.

In this form of the invention, the e-mail message package comprising the MIME file of the cipher text, encrypted header and outer header is further signed digitally for receipt directly by the TTP, using an extra outer PO header 28, and sent via the SMTP connection to the TTP as shown in Figure 5. The TTP returns a proof of submission (time and date stamp) of the e-mail message to the sender upon receipt. The header 28 contains a list of the intended recipients and any other options that the sender has selected. The TTP forwards the MIME content to each of the recipients with a message body describing the sent data and instructions to the recipient on how to obtain software to decrypt the MIME inclusion (as in the recorded delivery embodiment). Receipt of the e-mail package and forwarding to the receiver are events that are logged by the TTP for optional interrogation by the sender or they can be preprogrammed options taken up on preparation of the message package.

The receiver is now in possession of essentially the same package as was received directly from the sender in the previous embodiment. In accordance with the same non-secure instructions in the e-mail received directly, the receiver sends the outer header and the encrypted header back to the TTP for decryption. Upon receipt, the TTP is able to confirm implicitly that the receiver received the e-mail and is attempting to open it. This event is also logged for interrogation by the sender, or preprogrammed notification, as confirmation of receipt by the receiver. Once the TTP is satisfied as to the authenticity of the receiver, based on the digitally signed request and receiver's signature, the inner header is signed for transmission to the recipient, as before. Thereafter, the decryption procedure takes the form previously described.

From the perspective of the message sender and recipient, the only difference between this embodiment of the invention and the previous embodiment, is that the TTP can return a time-stamp (postmark) which provides proof-of-submission that the message was submitted and that the TTP forwarded it.

Message delivery status information can be viewed by the sender by means of an additional on-screen tool bar on the sender's personal computer. The sender can interrogate the TTP at any time or arrange to be notified as and when appropriate events have occurred. Additionally, the sender can arrange to be notified if a particular event is not logged by the TTP within a specified period. Similarly, the intended recipient is able to obtain event logging information in a similar way.

The invention is intended to be used with e-mail communications to provide secure communication, status checking and non-repudiation. By routing the message through the TTP, time stamping of delivery of the message package is also possible as referred to above. Routing the cipher text directly to the intended recipient creates a request for a key from the recipient which can be time-stamped by the TTP as confirmation of receipt whether or not the TTP was a party to the transmission of the message from the sender to the recipient. Thereafter, the request to the TTP from the recipient for decryption to reveal K_{R} is further logged and reported to the sender as an attempt to open the encrypted data. Routing the cipher text directly also avoids the need for cipher text handling by the TTP at all.

Both embodiments provide three primary functions, namely message postmarking, key release and enquiry processing using the logging facility in the data processor 16.

In order to provide strong audit capability, each entry in the audit log of the data processor is protected by a media access control (MAC) routine internal to the TTP to detect tampering with the audit log, including the addition, modification and deletion of entries. There is an important requirement of a TTP of sufficiently high security.

In more detail, the message processing by the data processor: accepts a PEM formatted message from the sender; validates the sender's signature; creates a database entry for the message which is updated as the message passes through the system; calls a billing sub-routine passing the time, date, sender's distinguished name, sender's e-mail address, messages identified, number of recipients and message size; returns an appropriate message to the sender if the response from the billing sub-routine indicates that the message should be refused, indicating the reason for refusal and updating the audit entry; generates a signed message for each logged event noted in the audit log; and stores message header information in the TTP data processor so that one database record exists for each recipient in order to provide adequate delivery tracking.

Key release includes: accepting the connection from the sender; receiving the signed PEM-based message, containing the encrypted header; verifying the recipient by the request; calling a billing sub-routine; passing the time, date, sender's distinguished name, sender's e-mail address, message identifier and message size: sending an appropriate message to the sender if the billing sub-routine indicates that the message should be refused; updating the audit entry and sending a message to the recipient indicating the reason for key refusal; updating the database delivery status; extracting the inner header using the K_{PO} private key; sending the encrypted and signed PEM-based message containing the material required by the recipient; and writing appropriate information to the audit log.

Enquiry processing which permits user or administrative enquiry as to the delivery status of a message includes: accepting the direct real-time connection from the enquirer; receiving an encrypted and signed PEM-based enquiry; verifying the digital signatures from the sender and/or the recipient; retrieving the appropriate record from the database: comparing the enquirer's distinguished name to the database entry to ensure that the enquirer is the sender, recipient or an authorised administrator: returning an error if the enquirer is unauthorised: and returning a delivery status message if the enquirer is authorised.

It will be apparent to the skilled person that the keys used can be varied according to security requirements and perceived risk of compromise. For example, the inner header does not have to be rigorously encrypted but in some way at least obscured. In the art, there are the so-called 'crippling' techniques that provide a lesser level of security against infiltrating a message. In the alternative, hash routines can be used in place of a symmetric encryption together with digital signatures authenticating a message originator. The system of the invention is applicable to secure transmission of information generally although it is designed for secure transmission on e-mail. The use of a further encryption step which is controlled by the TTP means access to the data is controlled by the TTP until it has authenticated the recipient and the sender. Accordingly, the principles of the invention, which have been disclosed by way of the above examples, can be implemented in various ways. Those skilled in the art will readily recognise that these and other modifications and changes can be made to the present invention without strictly following the exemplary applications illustrated and described herein and without departing from the scope of the present invention which is set forth in the following claims.

## Claims

1. A data transfer system comprising: a sender facility (10); a receiver facility (12) and a key facility (14); the sender facility (10) having means for encrypting data for the intended recipient, means for splitting the data into encrypted parts such that no part is decryptable on its own, means for encrypting at least one of the parts for the key facility to produce a further encrypted part, means for combining the further encrypted part and the remaining encrypted part to produce a data block and means for sending the data block, the receiver facility (12) having means for receiving the data block, means for requesting decryption of the further encrypted part by the key facility (14) which has means for decrypting the further encrypted part and means for sending it to the receiver facility (12) and the receiver facility (12) also having means for decrypting the encrypted part and the decrypted further encrypted part provided by the key facility (14).

2. A system as claimed in claim 1 in which the sender facility (10) includes means for signing the data block.

3. A system as claimed in claim 1 or 2 in which the means for sending at the sender facility (10) are arranged to send the data block to the key facility (14) and the key facility (14) includes means for receiving the data block and forwarding the said block to the receiver facility (12).

4. A system as claimed in claim 3 in which the key facility (14) further includes means for logging receipt of the data block.

5. A system as claimed in claim 1 or 2 in which the means for seeding at the sender facility (10) are arranged to send the data block to the receiver facility (12) and the receiver facility (12) includes means for receiving the data block.

6. A system as claimed in claim 5 in which the key facility (14) further includes means for logging receipt of the further encrypted part.

7. A system as claimed in any of claims 1 to 6 in which the key facility (14) includes means for logging receipt of the request for decryption of the further encrypted part as proof of delivery of the block to the receiver facility (12).

8. A system as claimed in claim 7 in which the sender facility (10) includes means for requesting proof of delivery information from the key facility (14).

## Patentansprüche

1. Datenübertragungssystem, umfassend: eine Absendeeinrichtung (10), eine Empfängereinrichtung (12) und eine Schlüsseleinrichtung (14), wobei die Absendeeinrichtung (10) Folgendes aufweist: Mittel zum Verschlüsseln von Daten für den vorgesehenen Empfänger; Mittel zum Teilen der Daten in verschlüsselte Teile, dergestalt, dass kein Teil für sich allein entschlüsselt werden kann; Mittel zum Verschlüsseln von wenigstens einem der Teile für die Schlüsseleinrichtung zur Herstellung eines weiteren verschlüsselten Teiles; Mittel zum Kombinieren des weiter verschlüsselten Teils mit dem übrigen verschlüsselten Teil zu einem Datenblock; sowie Mittel zum Versenden des Datenblocks, und wobei die Empfängereinrichtung (12) Folgendes aufweist: Mittel zum Empfangen des Datenblocks; Mittel zum Anfordern einer Entschlüsselung des weiter verschlüsselten Teils durch die Schlüsseleinrichtung (14), die Mittel zum Entschlüsseln des weiter verschlüsselten Teils sowie Mittel zum Versenden desselben an die Empfängereinrichtung (12) aufweist; und wobei die Empfängereinrichtung (12) des Weiteren Mittel zum Entschlüsseln des verschlüsselten Teils und des entschlüsselten weiter verschlüsselten Teils, der von der Schlüsseleinrichtung (14) bereitgestellt wird, aufweist.

2. System nach Anspruch 1, wobei die Absendeeinrichtung (10) Mittel zum Signieren des Datenblocks aufweist.

3. System nach Anspruch 1 oder 2, wobei die in der Absendeeinrichtung (10) vorhandenen Mittel zum Versenden so konfiguriert sind, dass sie den Datenblock zu der Schlüsseleinrichtung (14) senden, und wobei die Schlüsseleinrichtung (14) Mittel zum Empfangen des Datenblocks und zum Weiterleiten dieses Blocks zu der Empfängereinrichtung (12) enthält.

4. System nach Anspruch 3, wobei die Schlüsseleinrichtung (14) des Weiteren Mittel zum Protokollieren des Empfangs des Datenblocks enthält.

5. System nach Anspruch 1 oder 2, wobei die in der Absendeeinrichtung (10) vorhandenen Mittel zum Versenden so konfiguriert sind, dass sie den Datenblock zu der Empfängereinrichtung (12) senden, und wobei die Empfängereinrichtung (12) Mittel zum Empfangen des Datenblocks enthält.

6. System nach Anspruch 5, wobei die Schlüsseleinrichtung (14) des Weiteren Mittel zum Protokollieren des Empfangs des weiter verschlüsselten Teils enthält.

7. System nach einem der Ansprüche 1 bis 6, wobei die Schlüsseleinrichtung (14) Mittel zum Protokollieren des Empfangs der Anforderung einer Entschlüsselung des weiter verschlüsselten Teils als Nachweis der Übergabe des Blocks an die Empfängereinrichtung (12) enthält.

8. System nach Anspruch 7, wobei die Absendeeinrichtung (10) Mittel zum Anfordern von Übergabenachweisinformationen von der Schlüsseleinrichtung (14) enthält.

## Revendications

1. Système de transfert de données comportant : une fonction d'émetteur (10), une fonction de récepteur (12) et une fonction de clé (14), la fonction d'émetteur (10) ayant des moyens pour crypter des données pour le destinataire voulu, des moyens pour diviser les données en parties cryptées de sorte qu'aucune partie ne soit décryptable par elle-même, des moyens pour crypter au moins l'une des parties pour la fonction de clé afin de produire une partie cryptée supplémentaire, des moyens pour combiner la partie cryptée supplémentaire et la partie cryptée restante afin de produire un bloc de données et des moyens pour envoyer le bloc de données, la fonction de récepteur (12) ayant des moyens pour recevoir le bloc de données, des moyens pour demander le décryptage de la partie cryptée supplémentaire par l'intermédiaire de la fonction de clé (14), laquelle a des moyens pour décrypter la partie cryptée supplémentaire et des moyens pour l'envoyer à la fonction de récepteur (12) et la fonction de récepteur (12) ayant également des moyens pour décrypter la partie cryptée et la partie cryptée supplémentaire décryptée délivrée par la fonction de clé (14).

2. Système selon la revendication 1, dans lequel la fonction d'émetteur (10) inclut des moyens pour signer le bloc de données.

3. Système selon la revendication 1 ou 2, dans lequel les moyens d'envoi de la fonction d'émetteur (10) sont conçus pour envoyer le bloc de données à la fonction de clé (14) et la fonction de clé (14) inclut des moyens pour recevoir le bloc de données et envoyer ledit bloc à la fonction de récepteur (12).

4. Système selon la revendication 3, dans lequel la fonction de clé (14) inclut en outre des moyens pour enregistrer la réception du bloc de données.

5. Système selon la revendication 1 ou 2 dans lequel les moyens d'envoi de la fonction d'émetteur (10) sont conçus pour envoyer le bloc de données à la fonction de récepteur (12) et la fonction de récepteur (12) inclut des moyens pour recevoir le bloc de données.

6. Système selon la revendication 5, dans lequel la fonction de clé (14) inclut en outre des moyens pour enregistrer la réception de la partie cryptée supplémentaire.

7. Système selon l'une quelconque des revendications 1 à 6, dans lequel la fonction de clé (14) inclut des moyens pour enregistrer la réception de la demande de décryptage de la partie cryptée supplémentaire en tant que preuve de livraison du bloc à la fonction de récepteur (12).

8. Système selon la revendication 7, dans lequel la fonction d'émetteur (10) inclut des moyens pour demander des informations de preuve de livraison à la fonction de clé (14).
